(19) Europäisches Patentamt / European Patent Office / Office européen des brevets

(11) **EP 3 058 319 B1**

(12) **EUROPEAN PATENT SPECIFICATION**

(45) Date of publication and mention of the grant of the patent:
**24.06.2020 Bulletin 2020/26**

(21) Application number: **14786793.1**

(22) Date of filing: **14.10.2014**

(51) Int Cl.:
**G01F 15/02** $^{(2006.01)}$    **G01F 1/66** $^{(2006.01)}$

(86) International application number:
**PCT/DK2014/050332**

(87) International publication number:
**WO 2015/055212 (23.04.2015 Gazette 2015/16)**

(54) **ALGORITHM FOR CALCULATING AMPLITUDES, PHASE- OR TIME DIFFERENCES**

ALGORITHMUS ZUR BERECHNUNG VON AMPLITUDEN SOWIE PHASEN- ODER LAUFZEITUNTERSCHIEDEN

ALGORITHME DE CALCUL D'AMPLITUDES, DE DÉPHASAGES OU DE DIFFÉRENCES TEMPORELLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2013 DK 201370582**
**09.04.2014 DK 201470196**

(43) Date of publication of application:
**24.08.2016 Bulletin 2016/34**

(73) Proprietor: **Science Flow LAB A/S**
**8700 Horsens (DK)**

(72) Inventors:
• **VOSS, Frands**
  **DK-6400 Sønderborg (DK)**
• **PETERS, Arne Stig**
  **DK-6430 Nordborg (DK)**

(74) Representative: **Patentgruppen A/S**
**Aaboulevarden 31, 4**
**8000 Aarhus C (DK)**

(56) References cited:
**WO-A1-95/04258     WO-A1-97/12248**

• YANG BO ET AL: "Forced oscillation to reduce zero flow error and thermal drift for non-reciprocal operating liquid ultrasonic flow meters", FLOW MEASUREMENT AND INSTRUMENTATION, BUTTERWORTH-HEINEMANN, OXFORD, GB, vol. 22, no. 4, 15 March 2011 (2011-03-15), pages 257-264, XP028224067, ISSN: 0955-5986, DOI: 10.1016/J.FLOWMEASINST.2011.03.005 [retrieved on 2011-03-24]
• Anonymous: "Hann function - Wikipedia, the free encyclopedia", , 22 July 2010 (2010-07-22), XP055163082, Retrieved from the Internet: URL:https://web.archive.org/web/2010072222 3058/http://en.wikipedia.org/wiki/Hann_fun ction [retrieved on 2015-01-19]

## Description

### Field of the Invention

The present invention relates to a system and a method for calculating the envelope, the phase- or time difference of a set of signals in a metering system. The phase- or time difference may typically be between a reference signal and a sensor signal or between two sensor signals or a transmitted and received sensor signal and the envelope of any of these signals.

### Background of the Invention

A non-published Danish patent application PA 2012 70241 discloses a system or a method for measuring flow in a flow duct, comprising at least two ultra sound transducers. It is the object of the pending application to measure the flow of air in a duct by one or more transducers transmitting beams of ultra sound controlled by a microcontroller based electronic system. Yang Bo Et al. "Forced oscillation to reduce zero flow error and thermal drift non-reciprocal operating liquid ultrasonic flow meters", Flow Measurement and Instrumentation, Butterworth-Heinemann, Oxford, GB, vol. 22, no. 4, 15 March 2011, page 257-264, XP028224067, ISSN: 0955-5986, DOI: 10.1016/J. Flowmeasinst.2011.03.005 discloses a method for calculating flow by using forced oscillation excitation. And WO 97/12248 A1 discloses a method for measuring a fluid flow rate between two points of a fluid flow by a combination of measurements of propagation time and acoustic phase shifts. The object can be achieved if the microcontroller stores a vector of data samples for each direction of transmission, which vector comprises an appropriate number of N samples forming a frame, which microcontroller multiply each value of the frame which a complex number, which microcontroller based on the result calculates the flow in the duct. By the invention according to the present patent application an efficient flow measurement of air flowing in a duct can be achieved by calculating the phase- or time difference between the two sampled set of signals.

### Object of the Invention

It is the object of the pending patent application to achieve a very fast calculation of the envelope and/or phase- or time difference between a set of signals as for example for measuring the fluid flow, gas or liquid, in a flow channel. A further object is to achieve calculation of such an envelope or phase- or time difference with extremely low power consumption of the system calculating the phase- or time difference.

### Description of the Invention

The object can be fulfilled by a system or a method as disclosed in claim 1 or 2 in that the system is configured to define a mathematical model for the flow measurement, in which model a reference frequency fr is replacing the actual frequency f in the calculation of the envelope and/or the phase or time difference between two signals and where the frequency fr is related to the sample frequency fs by the expression fr = fs/c where c is a real number.

The use of real numbers in calculations can have the positive effect that in the use of the same real number in sin/cos calculation each time end up in the same result that can be stored in a memory. By changing the sampling frequency so that if the frequency Fr is changed because of change in temperature, humidity or maybe density of a media can the relation between the two frequencies be the same in every situation. In this way is the sin/cos calculation reduced to values that might be stored in a memory in the system. Herby is sin/cos calculation reduced to a division of the two frequencies multiplied by a value from the memory. In that way fast and simple calculations can be performed.

This fast and power optimized calculation can be achieved by the following sequence of steps:

   a. perform condensing and summarizing of the data by use of a mathematic model in order to fit data to the following general model function g(t) = h(t)*sin($\omega* t + \varphi$) +C
   b: calculate the phase- or time difference by Least Square Fit LSQF for achieving the phase- or time difference (DT) between the two signals.

The metering system could typically be a distance measurement system or a flow meter such as a Coriolis Mass flow meter or an ultrasonic flow meter but not limited to these.

When calculating envelopes and/or phase- or time differences one often uses a technique of multiplying the sampled data with a Cosine and a Sine of the actual frequency in the system.

The envelope may basically be obtained by multiplying the same set of data with a p=cos($\omega$*t + $\varphi$) and s=sin($\omega$*t+$\varphi$) respectively and then take the square root (may often be omitted to speed up the calculation further) of the sum of the squares p and s. Often a filter (weight-) function is also added in the calculation of the envelope in order to make it more robust to frequency variations as well as immune to noise.

Often such calculations are quite cumbersome and thus time- and power consuming because the Cosine and Sine are fairly complicated to calculate in embedded systems and thus making it difficult to handle on battery operated equipment.

There are often different ways of handling this problem. One way is if the frequency of the system is varying very slowly and therefore the variables need not be calculated every time a new measurement is made but calculated values are to be stored and stored values to be renewed when the frequency changes.

The present invention discloses a different way to overcome the problem and may be used with even quite large variations in frequency and making calculations rather simple.

The trick is to choose the sample frequency in a certain relation to the system frequency but also to use a suitable weight function in the calculations.

The basic idea is to use a reference frequency which is one quarter of the sample frequency and then replace the system frequency with this reference frequency and do all calculations by the reference frequency. The demand is that the system frequency is within certain intervals in relation to the reference frequency. With this choice the Sine and Cosine becomes a specific sequence of zeros, ones and minus ones elimination the need of calculating the values!

In order to make the calculation more robust and immune to frequency variations but also noise it is an advantage to use a Hanning type weight function of a certain length.

Using an ultrasonic meter as a more detailed example of such a metering unit is typically comprising at least a first (A) and a second (B) transducer, which method concerns a plurality of mathematical calculations, generate and transmit a burst of n periods of ultrasound from the first transducer (A) towards the second transducer (B), and receive the burst of ultrasound at the transducer (B) defined as signal a, generate and transmit a burst of n periods of ultrasound from the second transducer (B) towards the first transducer (A), and receive the burst of ultrasound at the transducer (A), defined as signal b, perform analog to digital conversion of the received burst at the receiving transducer (A,B), and calculate from the sampled data a direct measurement of the time difference between the signals a and b by using a Least Square Fit method, LSQF, by fitting the sampled data to a certain model function describing the received signals and to calculate arrival times Ta and Tb respectively by using a Digital CFD making use of the envelope of the received signals.

The use of a mathematical model for the function is highly effective for getting rid of any noise that occurs, may be at relative high frequencies, but calculating further in the system using the model will give a phase- or time difference, DT using Least Square Fit to achieve the best fit of the measured data to a model function can lead to an expression of the phase- or time difference DT, which phase or time difference DT is representing the actual needed parameter in order to calculate for example the fluid flow in a flow duct. In that way a relative fast and effective flow calculation can be performed.

In a preferred embodiment of the invention the system performing Least Square Fit to a model function will directly calculate the phase- or time difference DT between two received signals a and b with transmission times (Ta, Tb) by fitting data to the given model function previously disclosed. Given a set of observations, one often wants to condense and summarize the data by fitting it to a "model" that depends on adjustable parameters. One has to choose or design a merit function that measures the agreement between the data and the model with a particular choice of parameters. The parameters of the model are then adjusted to achieve a minimum in the merit function, yielding best-fit parameters. The adjustment process is thus a problem in minimization in many dimensions.

Hereby it can be achieved that as soon as the physical system is designed many of the parameters will be the same for the system in operation. Many parameters are to be calculated only once and therefore, a calculation of phase- or time difference can be performed by using a number of constants which constants are depending on the different already controlled parameters.

In a further preferred embodiment of the invention can the system define same envelope function (h(t)) for both signals where ha is equal to hb. Hereby a relative simple calculation can be achieved because same envelope function is used for both of the two signals. This can be done because most of the different parameters having influence of the envelope function are equal in the two situations. The only difference which also will be expressed in the envelope function is the time delay between the transmission time in the flow direction and the transmission time in the direction against the flow direction. Therefore, it is logical that if the transducers are almost equal it is possible to use the same envelop function without having added any critical failures to the further calculation of the flow. Actually the envelopes may differ by a scale factor without affecting the calculation.

In an embodiment of the invention, the envelope function h(t) may be the product of P and t.

In a further preferred embodiment the envelope function h(t) may be considered a constant.

In a further preferred embodiment of the invention can the system define a reference frequency (fr) as the sampling frequency (fs) divided by a constant (Q), which constant (Q) can be an integer. Hereby can a much more simple calculation of for example sin and cos functions be performed simply because the triangular functions have to be calculated for constant values. Calculating sin, cos and tangent values to defined values because there is a common relation between two variables where the variables are depending on each other, it is possible instead of performing sin and cos calculations simply to pick up a value in a table. This value within the same value each time a calculation is performed. This will reduce the processing time in a computer system because calculation of sin and cos functions always are time consuming measured in the number of steps that have to be performed in the processor. Simply picking up a constant in a memory will be maybe 100 or 200 times faster than calculating a sin and cos function. Because all calculations in a processor also are power consuming will the highly effective calculations with less computer steps result in a much smaller power consumption of the processor.

*Defining the LSQF*

In a further preferred embodiment of the invention the can system calculate the phase- or time difference by a Least Square Fit, LSQF, to a model function and thus obtain especially the time difference DT between the two earlier mentioned signals but also the transmission times (Ta, Tb) may be obtained this way. DT is obtained by a mathematical analysis resulting in the following formulas:

$$g(j) = g(j; a_1, a_2, a_3, \dots, a_M) \quad (10)$$

$$minimize \ over \ a_1, a_2, a_3, \dots, a_M \colon \sum_{j=1}^{N_s} (d(j) - g(j; a_1, a_2, a_3, \dots, a_M))^2 \quad (11)$$

The model function g can either be linear or non-linear.
d(j) are measured data (numbers from 1 to Ns) and a's are parameters in the model function to be fitted to best fit to the data.
An obvious model would be the following:

$$g(t) = h(t; a_3, a_4, \dots, a_M) \cdot \sin(a_1 \cdot t + a_2) + C \quad (12)$$

The Least Square Fit method can result in a relative simple calculation, especially if some of the values are constant values. This will be the case as previous described in many situations simply because the flow duct is well-known as well as the transducers and if the media is well-known and not have any changes it is possible by the Least Square system to perform a relative fast and highly effective calculation of a flow.
In a further preferred embodiment for the invention can the envelope function have the following formula:

$$g_A(t) = h_A \sin(\omega t + \varphi_A) \quad (13)$$

$$g_B(t) = h_B \sin(\omega t + \varphi_B) \quad (14)$$

The $g_A$ and $g_B$ can be rewritten to the following:

$$g_A(t) = h_A \cos(\varphi_A) \sin(\omega t) + h_A \sin(\varphi_A) \cos(\omega t) = C_0 \sin(\omega t) + C_1 \cos(\omega t) \quad (15)$$

$$g_B(t) = h_B \cos(\varphi_B) \sin(\omega t) + h_B \sin(\varphi_B) \cos(\omega t) = D_0 \sin(\omega t) + D_1 \cos(\omega t) \quad (16)$$

Where

$$C_0 = h_A \cos(\varphi_A); \ C_1 = h_A \sin(\varphi_A); \ D_0 = h_B \cos(\varphi_B); \ D_1 = h_B \sin(\varphi_B)$$

or

$$\varphi_A = \mathrm{atan}(C_0/C_1) \quad (17)$$

$$\varphi_B = \mathrm{atan}(D_0/D_1) \quad (18)$$

The time difference DT = $T_D$ between the received signals at transducer A and B is given by:

$$T_D = \frac{\varphi_A - \varphi_B}{\omega} = \frac{\varphi_A - \varphi_B}{2\pi f} \quad (19)$$

where f is the transducer frequency. $g_A$ and $g_B$ are linear functions with respect to the parameters $C_0$, $C_1$, $D_0$ and $D_1$. The least square for linear function can be solved analytically and is given by the following [1]:

$$A^T A C = A^T d_A \quad (20)$$

$$A^T A D = A^T d_B \quad (21)$$

Where

$$A_{j1} = \sin \frac{j 2\pi f}{f_s} \quad (22)$$

$$A_{j2} = \cos \frac{j 2\pi f}{f_s} \quad (23)$$

$$C = \begin{matrix} C_0 \\ C_1 \end{matrix} \quad (24)$$

$$D = \begin{matrix} D_0 \\ D_1 \end{matrix} \quad (25)$$

$$A^T A = \begin{vmatrix} \displaystyle\sum_{j=1}^{N_{LS}} sin^2(j2\pi f/f_s) & \displaystyle\frac{1}{2}\sum_{j=1}^{N_{LS}} sin(2j2\pi f/f_s) \\ \displaystyle\frac{1}{2}\sum_{j=1}^{N_{LS}} sin(2j2\pi f/f_s) & \displaystyle\sum_{j=1}^{N_{LS}} cos^2(j2\pi f/f_s) \end{vmatrix}$$

$$(26)$$

By replacing f with fr where fr is a chosen reference frequency and choosing fr as the sample frequency divided by an integer number, calculations will be extremely simplified and thus very fast to implement in a microprocessor.

When replacing f with fr the calculated Td will not be the correct time difference for the real signals but this will just be a scale factor but may also be adjusted for by multiplying calculated Td with fr/f.

The model parameter is only applied to a finite part of the received signal. The interval for observation is kept constant for the two set of observations. The two signals have a small phase difference, such that the subset of the two envelope function is not the same. This means that phase difference implies that the start and end of the two envelope functions are not the same and only the overlapping part in the middle will be the same. To remove the edge part at the start and end has a windows weight function been multiplied to each observations, which is called the $win_{N_{LS}}$ function.

$A^TA$ and $A$ is independent from the actual measurements and can therefore be calculated in advance.

In the particular implementation has $\omega_r$ been forced to a fixed value:

$$win_{N_{LS}}(n) = hanning\ function = 0.5\left(1 - cos\left(\frac{2\pi n}{N_{LS}-1}\right)\right)\quad(27)$$

$$\omega_r = \frac{\omega_s}{4}$$

The Hanning (also known as Hann) function has been selected for the particular implementation. Other windows function could also be used if needed.

One of the important property of the weight function is that it must be continuous. As an example a Hamming function would be discontinuous at the start and the end. Discontinuity will result in systematic errors.

Another important property is to let as many as possible observation have a high weight. As another example the Blackman windows function is continues, but it will favour the middle section of observations more than the edge section of the observations in comparison with the Hanning function. Hence, the Hanning function will give a better robustness for noise, because more samples are with a higher weight. $\omega_r$ might not reflect the actual transducer frequency $\omega_t$ and could result in an error. However, this is not the case, because the same error is made for both signals and due to the least square minimization will the phase difference still be valid.

By using the envelop function, the so-called Hanning function, it is possible to limit all calculations to the very important part of the received curvature. By the Hanning function it is possible to achieve the actual time delay measurement at mostly the same position of an oscillating sin curve. Because only it is a time different that is important for the measurement and therefore only the 0 crossing of the actual sin function that is important most of the rest of the sin curves has for the measurement nearly no influence. Therefore, can a highly effective calculation of flow be performed.

$A^TA$ and $A$ are in-depended by the actual measurements and can therefore be calculated in advance.

Actually, the selected $\omega_r$ and $N_{LS}$ *is even* makes sure that the least square minimization is made over complete number of sin cycles of the signal. This property prevents an error, which would be made for in-complete sin cycle of the signal.

Defining the DCFD (Digital Constant Fraction Discriminator).

In a further preferred embodiment of the invention can the system calculate the transmission times by a DCFD defined by the following formulas:

$$T = I_{CFD} \cdot \frac{1}{f_s} + \frac{I_{adc} \cdot \frac{1}{f_s}}{d(I_{adc}) - d(I_{adc}+1)}\quad(1)$$

$$I_{CFD} \in \{1,2,3,..,N_s - N_w\} \mid CFD(I_{CFD}) \geq 0 \wedge CFD(I_{CFD}+1) \leq 0\quad(2)$$

$$I_{adc1} \in \{I_{CFD} - N_f, ..., I_{CFD} - 2, I_{CFD} - 1, I_{CFD}\} \mid d(I_{adc1}) \geq 0 \wedge d(I_{adc1}+1) \leq 0\quad(3)$$

$$I_{adc2} \in \{I_{CFD}, I_{CFD} + 1, I_{CFD} + 2, ..., I_{CFD} + N_f\} \mid d(I_{adc2}) \geq 0 \wedge d(I_{adc2}+1) \leq 0\quad(4)$$

$$I_{adc} = \begin{cases} I_{adc1}, if\ I_{CFD} - I_{adc1} < I_{adc2} - I_{CFD} \\ I_{adc2}, if\ I_{CFD} - I_{adc1} \geq I_{adc2} - I_{CFD} \end{cases}\quad(5)$$

$$CFD(j) = s(j + D_{CFD}) - K_{CFD} \cdot s(j)\quad(6)$$

$$s = LP(|y|) \quad (7)$$

$$y(j) = \sum_{k=1}^{N_w} w(k) \cdot A(j+k) \cdot d(j+k) \quad (8)$$

$$A(j) = \sin\left(\frac{2\pi f}{f_s} \cdot j\right) + i\cos\left(\frac{2\pi f}{f_s} \cdot j\right) (9)$$

Where

$N_S$ is the number of samples.
$N_f$ is the number of samples for one period of transducer frequency.
$w$ is the window function with size $N_w$.
$A$ is the complex reference function, f is the transducer frequency, $f_r$ is the reference frequency and $f_s$ is the sample frequency.
d is sampled data received either at Transducer A or B.
$LP$ is a low pass filter.
$D_{CFD}$ and $K_{CFD}$ are constants.

The DCFD basically defines a specific position in the received signal relative to the start of the signal DCFD_POS. This position will stay the same relative to the start of the signal no matter the time shift in the signal and no matter the amplitude of the signal! In obtaining Ta and Tb we actually use at least one zero crossing of the received signal specified relative to DCFD POS!

In the formulas defining the DCFD a relative simple and fast calculation of the flow may be achieved if f is replaced by fr in the formulas, because sin and cos functions as previously described can be reduced to picking up constant values in a memory.

The pending patent application further concerns use of a system as disclosed in claim 1 or in a method as disclosed in the claims 2-16, whereby the system and the method is used for very fast calculating of fluid flow in gas or liquid in a flow channel. Hereby can flow calculation be achieved with extremely low power consumption of the system calculating the fluid flow.

This system or method is not limited to measuring of flow. The basis algorithm can have much broader use, in fact in every triangular calculation. In every situation an integer relation between parameters can be achieved by adjusting one of the parameters. Triangular calculations can result in very fast and very precise calculation that result in an end, e.g. as a 1, -1 or a zero. This is very important in processor systems powered by batteries, where power consumption is to be kept low. Especially in flow calculations in Coriolis mass flow meters, mag flow meters or ultrasound measure systems this invention can be used.

## Description of the Drawing

Fig. 1    discloses one possible embodiment according to the invention.
fig. 2    discloses one possible example of the burst and the received signal.
Fig. 3    discloses one possible method to verify the algorithm behaviour

## Detailed Description of the Invention

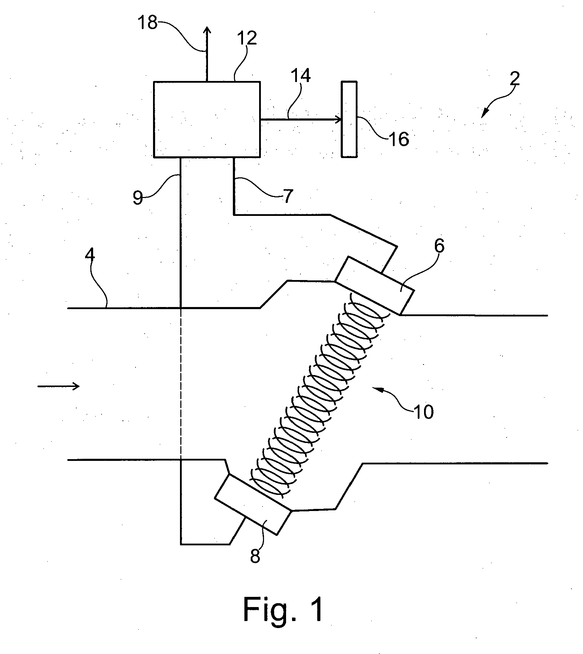

Fig. 1 shows one possible embodiment related to the invention, namely an ultrasonic flow meter where the fluid flow is calculated by calculating the phase difference between two received signals.

The system 2 comprises at least one flow duct 4 in which flow duct at least two ultrasound transducers 6 and 8 are in operation. The two transducers are transmitting ultrasound 10, may be such as one for example 6 is operating as a transmitter where 8 is operating as a receiver. Very shortly after the transmission is ending the transmission is changed so it performed in the opposite direction. The transducer 6 is by communication line 7 connected to a processor system 12, where the transducer 8 is connected by connection line 9 to the same processor system 12. The processor system 12 is connected by a communication line 14 for example to a display 16. Further is indicated one signal line 18 may be connected to a wireless communication system.

In operation the flow will be measured between the transducers 6 and 8 where in one situation, the transducer 6 acts as transmitter and the transducer 8 acts as receiver, and in the next situation the transmission occurs in the opposite direction where the transducer 6 is the receiver and the transducer 8 is the transmitter. On the basis of these signals and by the means provided inside the microcontroller 12 the system can calculate the flow in a highly efficient manner.

An ultrasonic flow meter consist of two transducers 6 and 8 as disclosed in the fig 1.

The following sequence of steps is performed:

1. A burst of n periods are sent from transducer 6 and received on transducer 8.
2. A burst of n periods are sent from transducer 8 and received on transducer 6.

The flow is given by:

$$Q = \frac{K \cdot C \cdot T_D}{T_A \cdot T_B}$$

Where $Q$ is the flow [$m^3/s$], $K$ is a correction factor, $C$ is a nominal calibration constant given by $23.7 \cdot 10^{-6}\ m^3$, $T_D$ is the time difference between $T_A$ and $T_B$, $T_A$ is the time from sending the burst on transducer A until received on transducer B and $T_B$ is the time from sending the burst on transducer B until received on transducer A.

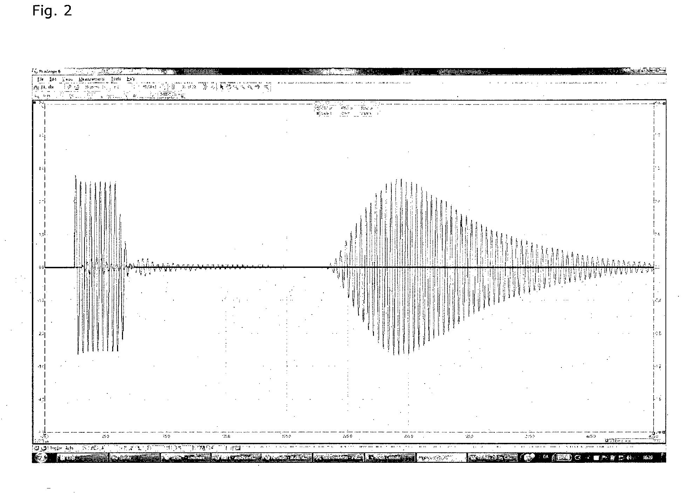

In figure 2 is an example of the burst and the received signal shown.

The main objective of the algorithm is to determine $T_D$, $T_A$ and $T_B$ with the following properties:

1. High accuracy - standard deviation for $T_D$ below 5 ns, $T_A$ and $T_B$ below 250 ns.

2. Adapt to the received signal amplitude, e.g. not dependent on a particular gain.

3. Robust in respect to noise and DC offset for the received signal.

4. Low power consumption, e.g. very efficient and fast execution time, so that consumed power is low.

The algorithm has been designed with the above features in mind.

The algorithm consists of two parts:

1. Determine $T_A$ and $T_B$.

2. Use the found $T_A$ and $T_B$ to select $N_{LS}$ samples for received signal at Transducer A and B. Perform a Least Square fit to determine $T_D$.

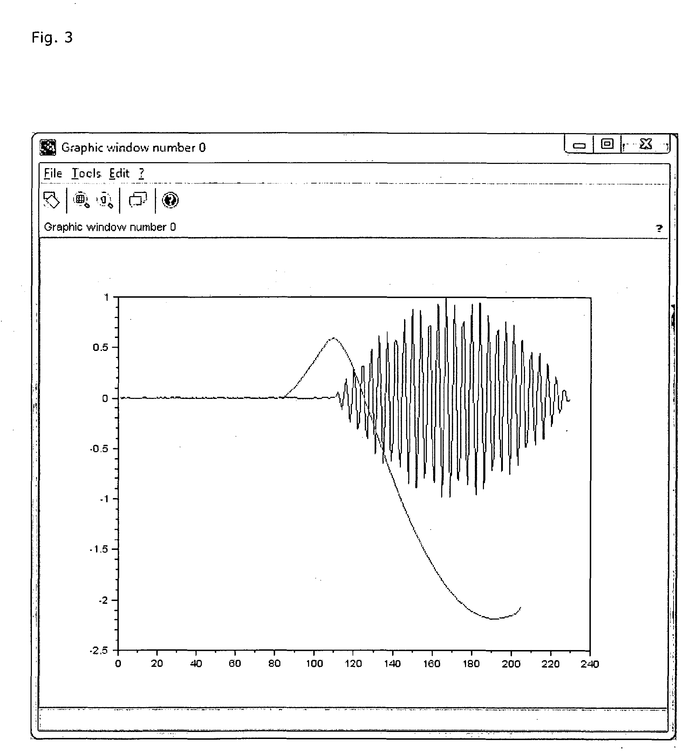

Fig. 3 discloses one possible method to verify the algorithm behaviour, which algorithm has a number of simulations be made. In the following are the main results of the simulations stated.

The simulation has been made in Scilab [1]. Two Scilab scripts have been made for the calculation of the CFD and the LS.

In a possible embodiment for an amplitude signal is to be used to determine the arrival times $T_{up}$ and $T_{dwn}$ by means of a digital constant fraction discriminator CFD.

The determined Ta and Tb are used to place the sampling frame so it starts where the pulse would have been if there has been no dead delay. The dead delay is the delay due to cables, solid parts of transducers and delay in the band pass filter. The start of the sampling frame shall ideally equal the transmission time in the fluid $T_{up}$ and $T_{dwn}$. The frequency of the timer clock limits the resolution, but the precision is sufficient for the $T_{up}$ and $T_{dwn}$ values in the denominator, but not sufficient for the difference $\Delta t$ since it requires more resolution than the sampling frames are adjusted with.

## 1 ALGORITHM

An ultrasonic flow meter consists of two transducers A and B.

The following sequence of steps is performed:

3. A burst of n periods are sent from transducer A and received on transducer B.

4. A burst of n periods are sent from transducer B and received on transducer A.

The flow is given by:

$$q = \frac{K \cdot Cal \cdot T_D}{T_A \cdot T_B}$$

$$(28)$$

Where $q$ is the flow [$m^3/s$], $K$ is a correction factor, *Cal* is a nominal calibration constant, $T_D$ is the time difference between the two received signals a and b with transmission times $T_A$ and $T_B$, $T_A$ is the time from sending the burst on transducer A until received on transducer B and $T_B$ is the time from sending the burst on transducer B until received on transducer A.

In Figure 2 an example of the burst and the received signal is shown.

The main objective of the algorithm is to determine $T_D$, $T_A$ and $T_B$ with the following properties:

5. High accuracy - standard deviation for $T_D$ below 5 ns, $T_A$ and $T_B$ below 250 ns.

6. Adapt to the received signal amplitude, e.g. not dependent on a particular gain.

7. Robust in respect to noise and DC offset for the received signal.

8. Low power consumption, e.g. very efficient and fast execution time, so that consumed power is low.

The algorithm has been designed with the above features in mind.

The algorithm could consist of two parts:

3. Determine $T_A$ and $T_B$.

4. Use the found $T_A$ and $T_B$ to select $N_{LS}$ samples for received signal at Transducer A and B. Perform a Least Square Fit, LSQF to determine $T_D$.

## Claims

1. System configured for measurement of a flow with a metering device comprising at least a first transducer (A) and a second transducer (B), which system generates a frequency f for the first transducer (A) to transmit a signal of the frequency f towards the second transducer (B), which second transducer (B) receives a transmitted signal (a) after the signal has travelled from the first transducer (A) to the second transducer (B) in a flow duct (4), which system generates the frequency f for the second transducer (B) to transmit a signal of the frequency f towards the first transducer (A), which transducer (A) receives a transmitted signal (b) after the signal has travelled from the second transducer (B) to the first transducer (A) in the flow duct (4), which system performs Analog to Digital conversion of the received signals into sampled signals by using a sampling frequency fs, which system is configured to measure the time difference between the at least two sampled signals (a, b) in order to measure the flow in the duct (4) by defining and using a mathematical model comprising cosine and sine terms whose arguments comprise f, **characterized in that**
in said mathematical model a reference frequency fr replaces the frequency f, where the reference frequency fr is related to the sampling frequency fs by the expression fr = fs/c, where c is a real number, said frequency f is in the range fr +/- 30%, sine and cosine values calculated based on said reference frequency fr are stored in a memory; and said system is configured to adjust said time difference by multiplication of a scale factor.

2. Method for measuring flow in a flow duct (4) with a metering device, said method comprising the steps of:

   - generating a frequency f for a first transducer (A) to transmit a signal of the frequency f towards a second transducer (B), which second transducer (B) receives a transmitted signal (a) after the signal has travelled from the first transducer (A) to the second transducer (B) in the flow duct (4),

- generating the frequency f for the second transducer (B) to transmit a signal of the frequency f towards the first transducer (A), which transducer (A) receives a transmitted signal (b) after the signal has travelled from the second transducer (B) to the first transducer (A) in the flow duct (4),
- performing Analog to Digital conversion of the received signals into sampled signals by using a sampling frequency fs,
- measuring the time difference between the at least two sampled signals (a, b) in order to measure the flow in the duct (4) by defining and using a mathematical model comprising cosine and sine terms whose arguments comprise f,

**characterized by** the following sequence of steps:
- replacing in the mathematical model the frequency f with a reference frequency fr, where the reference frequency fr is related to the sampling frequency fs by the expression fr=fs/c, wherein c is a real number, and wherein said frequency f is in the range fr +/- 30%
- storing in a memory sine and cosine values calculated based on said reference frequency fr and adjusting said time difference by multiplication of a scale factor

3. Method according to claim 2, **characterized in that** c is an integer number.

4. Method according to claim 2 or 3, **characterized in that** the reference frequency fr is 1/4 of the sample frequency fs corresponding to c = 4.

5. Method according to any of the claims 2-4, **characterized in that** a weight function Wi is used in the calculations, a weight function that is multiplied to the data points di.

6. Method according to any of the claims 2-5, **characterized in that** the weight function is a Hanning type.

7. Method according to any of the claims 2-6, **characterized in that** the phase- or time difference is calculated by using Least Square Fit (LSQF) by fitting measured data to a model function of the type g(t) = h(t)*sin(ω*t+φ) + C.

8. Method according to claim 7, **characterized in that** the model for the two signals a and b differs in the parameters φ and h(t).

9. Method according to claim 7 or 8, **characterized in that** the model is modified where h(t) = P*t.

10. Method according to claims 7-9 **characterized in that** h(t) is a constant.

11. Method according any of the claims 7-10, **characterized in that** C = 0.

12. Method according to any of the claims 2-11, **characterized in that** the system calculates the flow by a Least Square analysis of the transmission times (Ta, Tb) by a mathematical analysis resulting in the following formulas:

$$g(j) = g(j; a_1, a_2, a_3, \ldots, a_M)$$

$$\text{minimize over } a_1, a_2, a_3, \ldots, a_M : \sum_{j=1}^{N_S} (d(j) - g(j; a_1, a_2, a_3, \ldots, a_M))^2$$

which model is the following:

$$g(t) = h(t; a_3, a_4, \ldots, a_M) \cdot \sin(a_1 \cdot t + a_2)$$

13. Method according to any of the claims 2-12, **characterized in that** the model has the following formulas:

$$g_A(t) = h_A \sin(\omega t + \varphi_A)$$

$$g_B(t) = h_B \sin(\omega t + \varphi_B)$$

The $g_A$ and $g_B$ can be rewritten to the following:

$$g_A(t) = h_A \cos(\varphi_A) \sin(\omega t) + h_A \sin(\varphi_A) \cos(\omega t) = C_0 \sin(\omega t) + C_1 \cos(\omega t)$$

$$g_B(t) = h_B \cos(\varphi_B) \sin(\omega t) + h_B \sin(\varphi_B) \cos(\omega t)$$
$$= D_0 \sin(\omega t) + D_1 \cos(\omega t)$$

Where

$$C_0 = h_A \cos(\varphi_A) \,; \ C_1 = h_A \sin(\varphi_A) \,; \ D_0 = h_B \cos(\varphi_B) \,; \ D_1 = h_B \sin(\varphi_B)$$

or

$$\varphi_A = \operatorname{atan}(C_0/C_1)$$

$$\varphi_B = \operatorname{atan}(D_0/D_1)$$

where time difference between the received signal at transducer A and B is given by:

$$T_D = \frac{\varphi_A - \varphi_B}{\omega_r} = \frac{\varphi_A - \varphi_B}{2\pi f_r}$$

where $f_r$ is the reference frequency,
$g_A$ and $g_B$ are linear functions with respect to the parameters $C_0$, $C_1$, $D_0$ and $D_1$; the least square for linear function can be solved analytically and is given by the following formulas:

$$A^T A C = A^T d_A$$

$$A^T A D = A^T d_B$$

Where

$$A_{j1} = \sin \frac{j2\pi f}{f_s}$$

$$A_{j2} = \cos \frac{j2\pi f}{f_s}$$

$$C = \frac{C_0}{C_1}$$

$$D = \frac{D_0}{D_1}$$

$$A^T A = \begin{bmatrix} \sum_{j=1}^{N_{LS}} sin^2(j2\pi f/f_s) & \frac{1}{2}\sum_{j=1}^{N_{LS}} sin(2j2\pi f/f_s) \\ \frac{1}{2}\sum_{j=1}^{N_{LS}} sin(2j2\pi f/f_s) & \sum_{j=1}^{N_{LS}} cos^2(j2\pi f/f_s) \end{bmatrix}$$

14. Method according to any of the claims 2-13, **characterized in that** the system calculates the transmission times and actual position of the signal by DCFD resulting in the following formulas:

$$T = I_{CFD} \cdot \frac{1}{f_s} + \frac{I_{adc} \cdot \frac{1}{f_s}}{d(I_{adc}) - d(I_{adc} + 1)}$$

$$I_{CFD} \in \{1, 2, 3, .., N_s - N_w\} \mid CFD(I_{CFD}) \geq 0 \wedge CFD(I_{CFD} + 1) \leq 0$$

$$I_{adc1} \in \{I_{CFD} - N_f, ..., I_{CFD} - 2, I_{CFD} - 1, I_{CFD}\} \mid d(I_{adc1}) \geq 0 \wedge d(I_{adc1} + 1) \leq 0$$

$$I_{adc2} \in \{I_{CFD}, I_{CFD} + 1, I_{CFD} + 2, ..., I_{CFD} + N_f\} \mid d(I_{adc2}) \geq 0 \wedge d(I_{adc2} + 1) \leq 0$$

$$I_{adc} = \begin{cases} I_{adc1}, if \ I_{CFD} - I_{adc1} < I_{adc2} - I_{CFD} \\ I_{adc2}, if \ I_{CFD} - I_{adc1} \geq I_{adc2} - I_{CFD} \end{cases}$$

$$CFD(j) = s(j + D_{CFD}) - K_{CFD} \cdot s(j)$$

$$s = LP(|y|)$$

$$y(j) = \sum_{k=1}^{N_w} w(k) \cdot A(j + k) \cdot d(j + k)$$

$$A(j) = sin\left(\frac{2\pi f}{f_s} \cdot j\right) + i \cos\left(\frac{2\pi f}{f_s} \cdot j\right)$$

Where

$N_s$ is the number of samples
$N_f$ is the number of samples for one period of transducer frequency
$w$ is the weight function with size $N_w$
$A$ is the complex reference function,

*d* is sampled data received either at Transducer A or B

*LP* is a low pass filter

$D_{CFD}$ and $K_{CFD}$ are constants.

**15.** Method according to any of the claims 7-14, **characterized in that** a weight function is used in the calculations.

**16.** Method according to claim 15, **characterized in that** a weight function of Hanning type is used in the calculations.

**17.** Use of a system as disclosed in claim 1 or in a method as disclosed in claims 2-16, **characterized in that** the system and the method is used for calculating of fluid flow in gas or liquid in a flow channel.

**Patentansprüche**

**1.** System, konfiguriert zur Messung eines Flusses mit einer Messvorrichtung, umfassend mindestens einen ersten Wandler (A) und einen zweiten Wandler (B), welches System eine Frequenz f erzeugt, damit der erste Wandler (A) ein Signal der Frequenz f in Richtung des zweiten Wandlers (B) überträgt, welcher zweite Wandler (B) ein übertragenes Signal (a) empfängt, nachdem das Signal von dem ersten Wandler (A) zu dem zweiten Wandler (B) in einer Flussleitung (4) gelangt ist, welches System die Frequenz f erzeugt, damit der zweite Wandler (B) ein Signal der Frequenz f in Richtung des ersten Wandlers (A) überträgt, welcher Wandler (A) ein übertragenes Signal (b) empfängt, nachdem das Signal von dem zweiten Wandler (B) zu dem ersten Wandler (A) in der Flussleitung (4) gelangt ist, welches System eine Analog-Digital-Umsetzung der empfangenen Signale in abgetastete Signale durch Verwendung einer Abtastfrequenz fs durchführt, welches System konfiguriert ist, den Zeitunterschied zwischen den mindestens zwei abgetasteten Signalen (a, b) zu messen, um den Fluss in der Leitung (4) durch Definieren und Verwenden eines mathematischen Modells umfassend Kosinus- und Sinusterme, deren Argumente f umfassen, zu messen,
**dadurch gekennzeichnet, dass,** in dem mathematischen Modell, eine Referenzfrequenz fr die Frequenz f ersetzt, wobei die Referenzfrequenz fr durch den Ausdruck fr = fs/c mit der Abtastfrequenz fs verwandt ist, wobei c eine reale Zahl ist, die Frequenz f im Bereich fr +/- 30 % ist, auf Basis der Referenzfrequenz fr berechnete Sinus- und Kosinuswerte in einem Speicher hinterlegt sind; und das System konfiguriert ist, den Zeitunterschied durch Multiplikation eines Skalierfaktors anzupassen.

**2.** Verfahren zum Messen des Flusses in einer Flussleitung (4) mit einer Messvorrichtung, wobei das Verfahren die folgenden Schritte umfasst:

- Erzeugen einer Frequenz f, damit ein erster Wandler (A) ein Signal der Frequenz f in Richtung eines zweiten Wandlers (B) überträgt, welcher zweite Wandler (B) ein übertragenes Signal (a) empfängt, nachdem das Signal von dem ersten Wandler (A) zu dem zweiten Wandler (B) in der Flussleitung (4) gelangt ist,
- Erzeugen der Frequenz f, damit der zweite Wandler (B) ein Signal der Frequenz f in Richtung des ersten Wandlers (A) überträgt, welcher Wandler (A) ein übertragenes Signal (b) empfängt, nachdem das Signal von dem zweiten Wandler (B) zu dem ersten Wandler (A) in der Flussleitung (4) gelangt ist,
- Durchführen einer Analog-Digital-Umsetzung der empfangenen Signale in abgetastete Signale durch Verwendung einer Abtastfrequenz fs,
- Messen des Zeitunterschieds zwischen den mindestens zwei abgetasteten Signalen (a, b), um den Fluss in der Leitung (4) durch Definieren und Verwenden eines mathematischen Modells umfassend Kosinus- und Sinusterme, deren Argumente f umfassen, zu messen,
**gekennzeichnet durch** die folgende Sequenz von Schritten:
- Ersetzen, in dem mathematischen Modell, der Frequenz f mit einer Referenzfrequenz fr,
wobei die Referenzfrequenz fr durch den Ausdruck fr=fs/c mit der Abtastfrequenz fs verwandt ist,
wobei c eine reale Zahl ist und wobei die Frequenz f im Bereich fr +/- 30 % ist,
- Hinterlegen, in einem Speicher, von auf Basis der Referenzfrequenz fr berechneten Sinus- und Kosinuswerten und Anpassen des Zeitunterschieds durch Multiplikation eines Skalierfaktors.

**3.** Verfahren nach Anspruch 2, **dadurch gekennzeichnet, dass** c eine ganze Zahl ist.

**4.** Verfahren nach Anspruch 2 oder 3, **dadurch gekennzeichnet, dass** die Referenzfrequenz fr 1/4 der Abtastfrequenz fs entsprechend c = 4 ist.

**5.** Verfahren nach einem der Ansprüche 2-4, **dadurch gekennzeichnet, dass** eine Gewichtsfunktion Wi in den Berechnungen benutzt wird, eine Gewichtsfunktion, die zu Datenpunkten di multipliziert wird.

**6.** Verfahren nach einem der Ansprüche 2-5, **dadurch gekennzeichnet, dass** die Gewichtsfunktion ein Hanning-Typ ist.

**7.** Verfahren nach einem der Ansprüche 2-6, **dadurch gekennzeichnet, dass** der Phasen- oder Zeitunterschied durch Verwendung von Least Square Fit (LSQF) durch Anpassen gemessener Daten an eine Modellfunktion des Typs g(t) = h(t)*sin($\omega$*t+$_\varphi$) + C berechnet wird.

**8.** Verfahren nach Anspruch 7, **dadurch gekennzeichnet, dass** sich das Modell für die zwei Signale a und b in den Parametern $_\varphi$ und h(t) unterscheidet.

**9.** Verfahren nach Anspruch 7 oder 8, **dadurch gekennzeichnet, dass** das Modell modifiziert wird, wobei h(t) = P*t.

**10.** Verfahren nach Anspruch 7-9, **dadurch gekennzeichnet, dass** h(t) eine Konstante ist.

**11.** Verfahren nach einem der Ansprüche 7-10, **dadurch gekennzeichnet, dass** C = 0.

**12.** Verfahren nach einem der Ansprüche 2-11, **dadurch gekennzeichnet, dass** das System den Fluss durch eine Least-Square-Analyse der Übertragungszeiten ($T_a$, $T_b$) durch eine mathematische Analyse berechnet, die in den folgenden Formeln resultiert:

$$g(j) = g(j; a_1, a_2, a_3, ..., a_M)$$

man minimiere über $a_1, a_2, a_3, ..., a_M : \sum_{j=1}^{N_s} (d(j) - g(j; a_1, a_2, a_3, ..., a_M))^2$ welches Modell folgendes ist:

$$g(t) = h(t; a_3, a_4, ..., a_M) \cdot \sin(a_1 \cdot t + a_2)$$

**13.** Verfahren nach einem der Ansprüche 2-12, **dadurch gekennzeichnet, dass** das Modell die folgenden Formeln aufweist:

$$g_A(t) = h_A \sin(\omega t + \varphi_A)$$

$$g_B(t) = h_B \sin(\omega t + \varphi_B)$$

$g_A$ und $g_B$ in Folgendes umgeschrieben werden können:

$$g_A(t) = h_A \cos(\varphi_A) \sin(\omega t) + h_A \sin(\varphi_A) \cos(\omega t) = C_0 \sin(\omega t) + C_1 \cos(\omega t)$$

$$g_B(t) = h_B \cos(\varphi_B) \sin(\omega t) + h_B \sin(\varphi_B) \cos(\omega t) = D_0 \sin(\omega t) + D_1 \cos(\omega t)$$

wobei

$$C_0 = h_A \cos(\varphi_A) \, ; \; C_1 = h_A \sin(\varphi_A) \, ; \; D_0 = h_B \cos(\varphi_B) \, ; \; D_1 = h_B \sin(\varphi_B)$$

*oder*

$$\varphi_A = \operatorname{atan}(C_0/C_1)$$

$$\varphi_B = \operatorname{atan}(D_0/D_1)$$

wobei der Zeitunterschied zwischen dem empfangenen Signal an Wandler A und B angegeben wird durch:

$$T_D = \frac{\varphi_A - \varphi_B}{\omega_r} = \frac{\varphi_A - \varphi_B}{2\pi f_r}$$

wobei *fr* die Referenzfrequenz ist,
$g_A$ und $g_B$ lineare Funktionen mit Bezug auf die Parameter $C_0$, $C_1$, $D_0$ und $D_1$ sind; das kleinste Quadrat für lineare Funktion analytisch gelöst werden kann und von den folgenden Formeln angegeben wird:

$$A^T A C = A^T d_A$$

$$A^T A D = A^T d_B$$

wobei

$$A_{j1} = \sin \frac{j2\pi f}{f_s}$$

$$A_{j2} = \cos \frac{j2\pi f}{f_s}$$

$$C = \frac{C_0}{C_1}$$

$$D = \frac{D_0}{D_1}$$

$$A^T A = \begin{bmatrix} \sum_{j=1}^{N_{LS}} \sin^2(j2\pi f/f_s) & \frac{1}{2}\sum_{j=1}^{N_{LS}} \sin(2j2\pi f/f_s) \\ \frac{1}{2}\sum_{j=1}^{N_{LS}} \sin(2j2\pi f/f_s) & \sum_{j=1}^{N_{LS}} \cos^2(j2\pi f/f_s) \end{bmatrix}$$

.

**14.** Verfahren nach einem der Ansprüche 2-13, **dadurch gekennzeichnet, dass** das System die Übertragungszeiten und Istposition des Signals durch DCFD berechnet, was in den folgenden Formeln resultiert:

$$T = I_{CFD} \cdot \frac{1}{f_s} + \frac{I_{adc} \cdot \frac{1}{f_s}}{d(I_{adc}) - d(I_{adc} + 1)}$$

$$I_{CFD} \in \{1, 2, 3, .., N_s - N_w\} \mid CFD(I_{CFD}) \geq 0 \wedge CFD(I_{CFD} + 1) \leq 0$$

$$I_{adc1} \in \{I_{CFD} - N_f, ..., I_{CFD} - 2, I_{CFD} - 1, I_{CFD}\} \mid d(I_{adc1}) \geq 0 \wedge d(I_{adc1} + 1) \leq 0$$

$$I_{adc2} \in \{I_{CFD}, I_{CFD} + 1, I_{CFD} + 2, ..., I_{CFD} + N_f\} \mid d(I_{adc2}) \geq 0 \wedge d(I_{adc2} + 1) \leq 0$$

$$I_{adc} = \begin{cases} I_{adc1}, if \ I_{CFD} - I_{adc1} < I_{adc2} - I_{CFD} \\ I_{adc2}, if \ I_{CFD} - I_{adc1} \geq I_{adc2} - I_{CFD} \end{cases}$$

$$CFD(j) = s(j + D_{CFD}) - K_{CFD} \cdot s(j)$$

$$s = LP(|y|)$$

$$y(j) = \sum_{k=1}^{N_w} w(k) \cdot A(j + k) \cdot d(j + k)$$

$$A(j) = \sin\left(\frac{2\pi f}{f_s} \cdot j\right) + i \cos\left(\frac{2\pi f}{f_s} \cdot j\right)$$

wobei

$N_s$ die Anzahl Abtastungen ist
$N_f$ die Anzahl Abtastungen für eine Wandlerfrequenz-Periode ist
w die Gewichtsfunktion mit Größe $N_w$ ist
$A$ die komplexe Referenzfunktion ist,
d abgetastete, entweder an Wandler A oder B empfangene Daten sind
$LP$ ein Tiefpassfilter ist
$D_{CFD}$ und $K_{CFD}$ Konstanten sind.

15. Verfahren nach einem der Ansprüche 7-14, **dadurch gekennzeichnet, dass** eine Gewichtsfunktion in den Berechnungen benutzt wird.

16. Verfahren nach Anspruch 15, **dadurch gekennzeichnet, dass** eine Gewichtsfunktion vom Hanning-Typ in den Berechnungen benutzt wird.

17. Verwendung eines Systems wie in Anspruch 1 offenbart oder in einem Verfahren wie in Ansprüchen 2-16 offenbart, **dadurch gekennzeichnet, dass** das System und das Verfahren zur Berechnung des Fluidflusses in Gas oder Flüssigkeit in einer Flussleitung benutzt werden.

**Revendications**

1. Système conçu pour mesurer un écoulement avec un dispositif de mesure comprenant au moins un premier transducteur (A) et un second transducteur (B), ledit système générant une fréquence f pour que le premier transducteur (A) transmette un signal de la fréquence f vers le second transducteur (B), ledit second transducteur (B) recevant un signal émis (a) après que le signal s'est déplacé du premier transducteur (A) au second transducteur (B) dans un conduit d'écoulement (4), ledit système générant la fréquence f pour que le second transducteur (B) transmette un signal de la fréquence f vers le premier transducteur (A), ledit transducteur (A) recevant un signal émis (b) après que le signal s'est déplacé du second transducteur (B) au premier transducteur (A) dans le conduit d'écoulement (4), ledit système effectuant une conversion analogique-numérique des signaux reçus en des signaux échantillonnés à l'aide d'une fréquence d'échantillonnage fs, ledit système étant conçu pour mesurer la différence temporelle entre les au moins deux signaux échantillonnés (a, b) afin de mesurer l'écoulement dans le conduit (4) en définissant et en utilisant un modèle mathématique comprenant des termes cosinus et sinus dont les arguments comprennent f, **caractérisé en ce que**
dans ledit modèle mathématique, une fréquence de référence fr remplace la fréquence f, où la fréquence de référence fr est liée à la fréquence d'échantillonnage fs par l'expression fr = fs/c, où c est un nombre réel, ladite fréquence f étant comprise dans la plage fr +/-30 %, les valeurs sinus et cosinus calculées sur la base de ladite fréquence de référence fr sont stockées dans une mémoire ; et ledit système est configuré pour régler ladite différence temporelle par multiplication d'un facteur d'échelle.

2. Procédé permettant la mesure de l'écoulement dans un conduit d'écoulement (4) avec un dispositif de mesure, ledit procédé comprenant les étapes de :

   - génération d'une fréquence f pour qu'un premier transducteur (A) transmette un signal de la fréquence f vers un second transducteur (B), ledit second transducteur (B) recevant un signal transmis (a) après que le signal s'est déplacé du premier transducteur (A) au second transducteur (B) dans le conduit d'écoulement (4),
   - génération de la fréquence f pour que le second transducteur (B) transmette un signal de la fréquence f vers le premier transducteur (A), ledit transducteur (A) recevant un signal émis (b) après que le signal s'est déplacé du second transducteur (B) au premier transducteur (A) dans le conduit d'écoulement (4),
   - réalisation d'une conversion analogique-numérique des signaux reçus en des signaux échantillonnés à l'aide d'une fréquence d'échantillonnage fs,
   - mesure de la différence temporelle entre les au moins deux signaux échantillonnés (a, b) afin de mesurer l'écoulement dans le conduit (4) en définissant et en utilisant un modèle mathématique comprenant des termes cosinus et sinus dont les arguments comprennent f, **caractérisé par** la séquence d'étapes suivante :
   - remplacement dans le modèle mathématique de la fréquence f par une fréquence de référence fr, où la fréquence de référence fr est liée à la fréquence d'échantillonnage fs par l'expression fr = fs/c, c étant un nombre réel, et ladite fréquence f étant comprise dans la plage fr +/- 30 %
   - stockage dans une mémoire des valeurs de sinus et de cosinus calculées sur la base de ladite fréquence de référence fr et réglage de ladite différence temporelle par multiplication d'un facteur d'échelle.

3. Procédé selon la revendication 2, **caractérisé en ce que** c est un nombre entier.

4. Procédé selon la revendication 2 ou 3, **caractérisé en ce que** la fréquence de référence fr est 1/4 de la fréquence d'échantillonnage fs correspondant à c = 4.

5. Procédé selon l'une quelconque des revendications 2 à 4, **caractérisé en ce qu'**une fonction de pondération Wi est utilisée dans les calculs, une fonction de pondération qui est multipliée aux points de données di.

6. Procédé selon l'une quelconque des revendications 2 à 5, **caractérisé en ce que** la fonction de pondération est du type Hanning.

7. Procédé selon l'une quelconque des revendications 2 à 6, **caractérisé en ce que** la différence de phase ou la différence temporelle est calculée à l'aide de la méthode des moindres carrés (LSQF) en adaptant les données mesurées à une fonction de modèle du type g(t) = h(t)*sin(ω*t+φ)+C.

8. Procédé selon la revendication 7, **caractérisé en ce que** le modèle pour les deux signaux a et b diffère dans les paramètres φ et h(t).

9. Procédé selon la revendication 7 ou 8, **caractérisé en ce que** le modèle est modifié où h(t) = P*t.

10. Procédé selon les revendications 7 à 9, **caractérisé en ce que** h(t) est une constante.

11. Procédé selon l'une quelconque des revendications 7 à 10, **caractérisé en ce que** C = 0.

12. Procédé selon l'une quelconque des revendications 2 à 11, **caractérisé en ce que** le système calcule l'écoulement par une analyse des moindres carrés des temps d'émission (Ta, Tb) par une analyse mathématique aboutissant aux formules suivantes :

$$g(j) = g(j; a_1, a_2, a_3, \ldots, a_M)$$

minimisé sur $a_1, a_2, a_3, \ldots, a_M$ : $\displaystyle\sum_{j=1}^{N_s} (d(j) - g(j; a_1, a_2, a_3, \ldots, a_M))^2$  ledit modèle étant le suivant :

$$g(t) = h(t; a_3, a_4, \ldots, a_M) \cdot \sin(a_1 \cdot t + a_2)$$

.

13. Procédé selon l'une quelconque des revendications 2 à 12, **caractérisé en ce que** le modèle présente les formules suivantes :

$$g_A(t) = h_A \sin(\omega t + \varphi_A)$$

$$g_B(t) = h_B \sin(\omega t + \varphi_B)$$

les $g_A$ et $g_B$ peuvent être réécrits comme suit :

$$g_A(t) = h_A \cos(\varphi_A) \sin(\omega t) + h_A \sin(\varphi_A) \cos(\omega t) = C_0 \sin(\omega t) + C_1 \cos(\omega t)$$

$$g_B(t) = h_B \cos(\varphi_B) \sin(\omega t) + h_B \sin(\varphi_B) \cos(\omega t) = D_0 \sin(\omega t) + D_1 \cos(\omega t)$$

où

$$C_0 = h_A \cos(\varphi_A) \,;\; C_1 = h_A \sin(\varphi_A) \,;\; D_0 = h_B \cos(\varphi_B) \,;\; D_1 = h_B \sin(\varphi_B)$$

ou

$$\varphi_A = \operatorname{atan}(C_0/C_1)$$

$$\varphi_B = \operatorname{atan}(D_0/D_1)$$

où la différence temporelle entre le signal reçu au niveau des transducteurs A et B est donnée par :

$$T_D = \frac{\varphi_A - \varphi_B}{\omega_r} = \frac{\varphi_A - \varphi_B}{2\pi f_r}$$

où $f_r$ est la fréquence de référence,

$g_A$ et $g_B$ sont des fonctions linéaires par rapport aux paramètres $C_0$, $C_1$, $D_0$ et $D_1$ ; la méthode des moindres carrés pour la fonction linéaire peut être résolue analytiquement et est donnée par les formules suivantes :

$$A^T A C = A^T d_A$$

$$A^T A D = A^T d_B$$

où

$$A_{j1} = \sin \frac{j2\pi f}{f_s}$$

$$A_{j2} = \cos \frac{j2\pi f}{f_s}$$

$$C = \frac{C_0}{C_1}$$

$$D = \frac{D_0}{D_1}$$

$$A^T A = \begin{bmatrix} \sum_{j=1}^{N_{LS}} sin^2(j2\pi f/f_s) & \frac{1}{2}\sum_{j=1}^{N_{LS}} sin(2j2\pi f/f_s) \\ \frac{1}{2}\sum_{j=1}^{N_{LS}} sin(2j2\pi f/f_s) & \sum_{j=1}^{N_{LS}} cos^2(j2\pi f/f_s) \end{bmatrix}$$

.

**14.** Procédé selon l'une quelconque des revendications 2 à 13, **caractérisé en ce que** le système calcule les temps d'émission et la position actuelle du signal par DCFD conduisant aux formules suivantes :

$$T = I_{CFD} \cdot \frac{1}{f_s} + \frac{I_{adc} \cdot \frac{1}{f_s}}{d(I_{adc}) - d(I_{adc} + 1)}$$

$$I_{CFD} \in \{1, 2, 3, .., N_s - N_w\} \mid CFD(I_{CFD}) \geq 0 \wedge CFD(I_{CFD} + 1) \leq 0$$

$$I_{adc1} \in \{I_{CFD} - N_f, ..., I_{CFD} - 2, I_{CFD} - 1, I_{CFD}\} \mid d(I_{adc1}) \geq 0 \wedge d(I_{adc1} + 1) \leq 0$$

$$I_{adc2} \in \{I_{CFD}, I_{CFD} + 1, I_{CFD} + 2, \ldots, I_{CFD} + N_f\} \mid d(I_{adc2}) \geq 0 \wedge d(I_{adc2} + 1) \leq 0$$

$$I_{adc} = \begin{cases} I_{adc1}, & if \ I_{CFD} - I_{adc1} < I_{adc2} - I_{CFD} \\ I_{adc2}, & if \ I_{CFD} - I_{adc1} \geq I_{adc2} - I_{CFD} \end{cases}$$

$$CFD(j) = s(j + D_{CFD}) - K_{CFD} \cdot s(j)$$

$$s = LP(|y|)$$

$$y(j) = \sum_{k=1}^{N_w} w(k) \cdot A(j + k) \cdot d(j + k)$$

$$A(j) = \sin\left(\frac{2\pi f}{f_s} \cdot j\right) + i \cos\left(\frac{2\pi f}{f_s} \cdot j\right)$$

où

$N_s$ est le nombre d'échantillons
$Nf$ est le nombre d'échantillons pour une période de fréquence du transducteur
$w$ *est* la fonction de pondération avec la taille $N_w$
$A$ est la fonction de référence complexe,
$d$ représente des données échantillonnées reçues au transducteur A ou B
$LP$ est un filtre passe-bas
$D_{CFD}$ et $K_{CFD}$ sont des constantes.

**15.** Procédé selon l'une quelconque des revendications 7 à 14, **caractérisé en ce qu'**une fonction de pondération est utilisée dans les calculs.

**16.** Procédé selon la revendication 15, **caractérisé en ce qu'**une fonction de pondération de type Hanning est utilisée dans les calculs.

**17.** Utilisation d'un système selon la revendication 1 ou dans un procédé selon les revendications 2 à 16, **caractérisée en ce que** le système et le procédé sont utilisés pour calculer l'écoulement de fluide dans le gaz ou le liquide dans un canal d'écoulement.

Fig. 1

Fig. 2

Fig. 3

**EP 3 058 319 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DK 201270241

- WO 9712248 A1

**Non-patent literature cited in the description**

- **YANG BO et al.** Forced oscillation to reduce zero flow error and thermal drift non-reciprocal operating liquid ultrasonic flow meters. *Flow Measurement and Instrumentation, Butterworth-Heinemann,* 15 March 2011, vol. 22 (4), ISSN 0955-5986, 257-264